# FASCICULE DE BREVET EUROPEEN

(11) **EP 1 770 246 B1**
(45) Date de publication et mention de la délivrance du brevet: **27.02.2013**
(21) Numéro de dépôt: 06076712.6
(22) Date de dépôt: 12.09.2006
(51) Int. Cl.: F01D 25/24, F01D 9/04, F01D 25/16, F01D 9/06, F01D 5/14

(54) **Carter structural de turbomoteur**
Strukturelles Gehäuse einer Turbomaschine
Structural housing of a turbomachine

(30) Priorité: 29.09.2005 FR 0509927
(43) Date de publication de la demande: 04.04.2007
(73) Titulaire: SOCIETE NATIONALE D'ETUDE ET DE CONSTRUCTION DE MOTEURS D'AVIATION "SNECMA", 75015 Paris (FR)
(72) Inventeur: Girard, Nicolas, 75011 Paris (FR); Cameriano, Laurent, 77210 Avon (FR)
(74) Mandataire: Gevers France

(56) Documents cités:
- EP-A- 1 247 944
- US-A- 2 928 648
- US-A- 4 987 736
- US-A- 5 088 279

## Description

La présente invention concerne un carter structural de support de pièces rotatives d'un turbomoteur, notamment d'un turboréacteur.

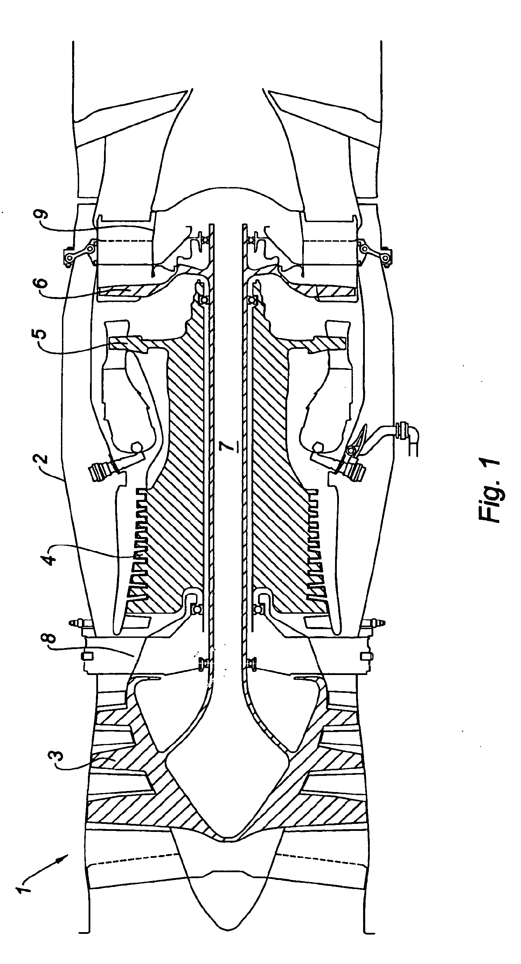

Comme illustré sur la figure 1, un turbomoteur 1 comporte, de façon générale, une enceinte tubulaire 2, contenant des corps rotatifs, tels que des étages de compresseur 3-4 et de turbine 5-6 montés sur un ou plusieurs arbres de rotation 7 disposés axialement dans l'enceinte 2 du turbomoteur, qui constitue un stator.

La structure d'un turbomoteur 1 comporte des carters structuraux 8 et 9 qui supportent le ou les arbres 7 en rotation. Ces carters sont reliés à l'aéronef, par l'intermédiaire de pièces de suspension (pylône, mât, attaches ou biellettes).

Un turbomoteur 1 comporte au moins deux carters structuraux 8 et 9 : un carter intermédiaire qui supporte des paliers de rotation à l'avant de l'arbre rotatif 7 et un carter d'échappement 9 qui supporte des paliers de rotation à l'arrière de l'arbre rotatif 7.

Les carters 8 et 9 ont pour fonction de suspendre les corps rotatifs 3 à 7 du moteur dans le stator 2, d'immobiliser les paliers de rotation et de transmettre les efforts mécaniques des paliers vers le stator 2.

Les documents FR-A-2 641 328, FR-A-2 681 401, US 4 987 736 et JP-A-9-324 699 montrent des exemples de structures de carters de turbomoteur.

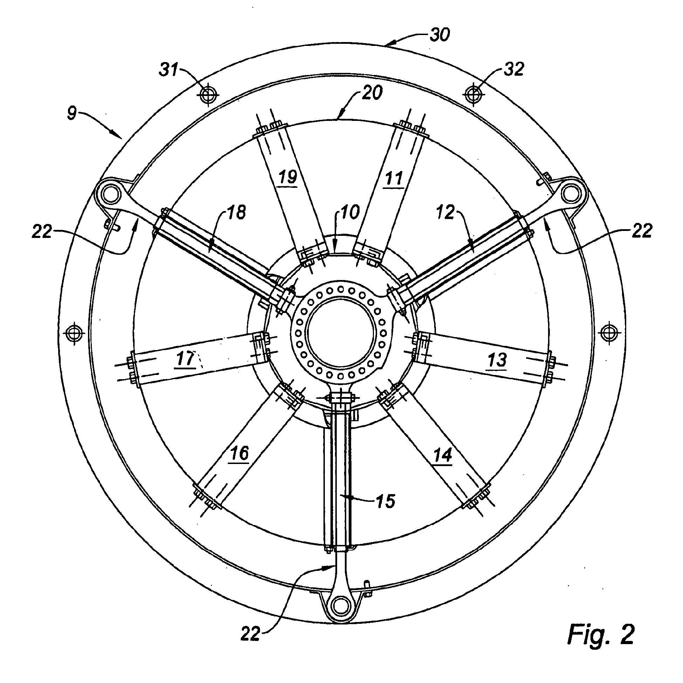

Comme illustré sur la figure 2, un carter structural 9 de turboréacteur de type connu, comprend un moyeu central 10 servant de support palier, une virole annulaire intermédiaire 20 et un anneau externe 30, concentriques au moyeu central 10. Le moyeu central 10 et la virole intermédiaire 20 sont reliés fixement et rigidement par une série de plusieurs bras 11 à 19 (au nombre de neuf ici) disposés radialement. La virole intermédiaire 20 et l'anneau externe 30 sont reliées de façon articulée par des biellettes de suspension 22. Ces biellettes 22 servent à transmettre les efforts mécaniques (atterrissages, manoeuvres de direction, poussée, balourds du moteur) entre le moyeu 10, les bras 11-19, la pièce annulaire intermédiaire 20 et la pièce annulaire externe 30. Les bras structuraux 11-19 ont une structure creuse profilée qui est dimensionnée pour supporter ces efforts mécaniques.

L'inconvénient est que le dimensionnement des bras creux des carters structuraux connus ne leur permet pas de supporter d'importants efforts mécaniques de façon prolongée.

Cependant, un objectif constant en aéronautique est de réduire la masse des éléments constitutifs des aéronefs sans nuire à leurs performances.

Le but de l'invention est d'optimiser la forme des pièces du carter de façon à augmenter la durée de vie de ces pièces, tout en limitant leur masse.

Pour cela, il est prévu, d'après l'invention, que le carter comporte deux types de bras structuraux : les bras principaux sont disposés radialement dans le prolongement des biellettes et supportent donc l'essentiel de la charge et des forces exercées par le moteur. Les bras secondaires sont éloignés des biellettes et supportent relativement moins de charges mécaniques que les bras principaux. L'invention prévoit, d'une part, d'alléger les bras secondaires en réduisant leur épaisseur de paroi par rapport aux bras principaux et, d'autre part, d'optimiser la géométrie des bras principaux en augmentant leur épaisseur de paroi dans les zones de contraintes maximales et en réduisant éventuellement leur épaisseur de paroi dans les zones de contraintes minimales.

L'invention concerne un carter structural de turbomoteur comprenant un moyeu central, au moins une virole intermédiaire et un anneau externe, concentriques, l'anneau externe et la virole intermédiaire étant reliés par l'intermédiaire de biellettes, la virole intermédiaire et le moyeu central étant reliés par une série de bras fixés radialement, la série de bras comprenant au moins un bras principal et au moins un bras secondaire, chaque bras principal étant disposé dans le prolongement d'une biellette et ayant une masse supérieure à celle d'un bras secondaire disposé à distance des biellettes.

Il est prévu que chaque bras principal présente, dans au moins une section transversale, une épaisseur de paroi supérieure à l'épaisseur de paroi d'un bras secondaire.

De préférence, chaque bras principal comporte au moins une zone présentant une épaisseur de paroi supérieure à l'épaisseur des parois du reste du bras.

Avantageusement, le bras principal présente une diminution progressive d'épaisseur de paroi entre la zone d'épaisseur supérieure et le reste du bras.

A titre indicatif, les bras secondaires présentent des parois latérales d'épaisseur de l'ordre de 70% de l'épaisseur des parois d'un bras principal.

Il est prévu que les bras creux comportent en aval du corps principal, des ailettes formant un bord de fuite, les parois d'ailette ayant une épaisseur inférieure à l'épaisseur des parois du corps principal du bras.

L'invention concerne également un turbomoteur comprenant un tel carter structural.

D'autres particularités ou avantages de l'invention apparaîtront clairement dans la suite de la description donnée à titre d'exemple non-limitatif, et faite en regard des dessins annexés sur lesquels :
- la figure 1 est une vue en coupe axiale d'un turbomoteur comportant des carters structuraux ;
- la figure 2 est une vue de l'avant dans l'axe d'un carter structural selon l'art antérieur ;
- la figure 3 est une vue en perspective d'un carter structural selon l'invention ;
- la figure 4A est une vue dans l'axe de l'arrière d'un carter structural selon l'invention ;
- la figure 4B est une vue en coupe axiale du carter de la figure 4A selon le plan vertical B-B (dit à 12 heures) ;
- la figure 5 est une vue de côté et de dessous d'un bras de carter structural selon l'invention ;
- la figure 6 est une coupe transversale d'un bras principal de carter structural selon l'invention ;
- la figure 7 est une coupe transversale d'un bras structural secondaire allégé selon l'invention ;
- la figure 8 est une vue en perspective d'une portion amont (corps principal) d'un bras principal montrant l'emplacement des zones subissant le plus de contraintes mécaniques ;
- la figure 9 est une coupe transversale d'un bras principal présentant une surépaisseur de paroi dans une zone de fortes contraintes, selon un deuxième mode de réalisation de l'invention ; et,
- la figure 10 est une autre coupe transversale de bras principal ayant une forme optimisée avec une zone surépaissie et une zone amincie, selon un troisième mode de réalisation de l'invention.

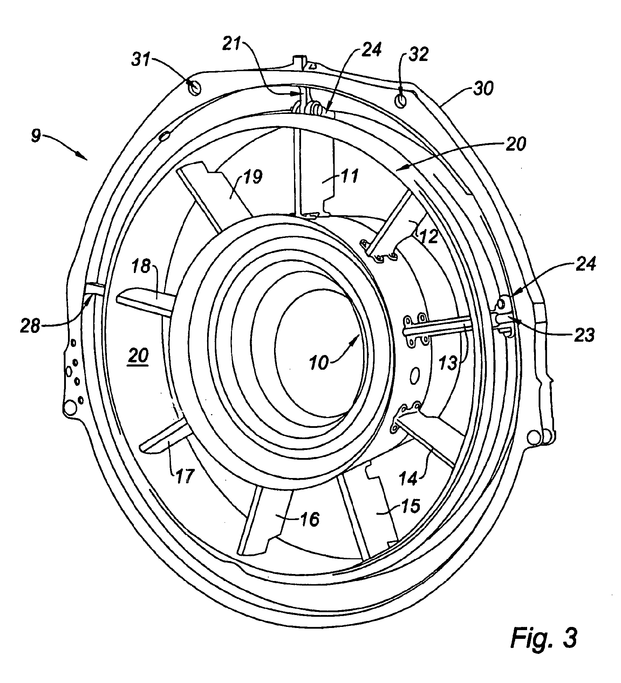

Sur la figure 3 est représenté un carter structural d'échappement 9 selon l'invention, comportant un moyeu central circulaire 10, un anneau périphérique externe 30 et une virole annulaire intermédiaire 20. Les pièces 10,20,30 sont concentriques et peuvent être entièrement de révolution ou non, notamment de forme polygonale.

L'anneau externe 30 et la virole intermédiaire 20 sont reliés par des biellettes de suspension 21,23,28, au nombre de trois ici.

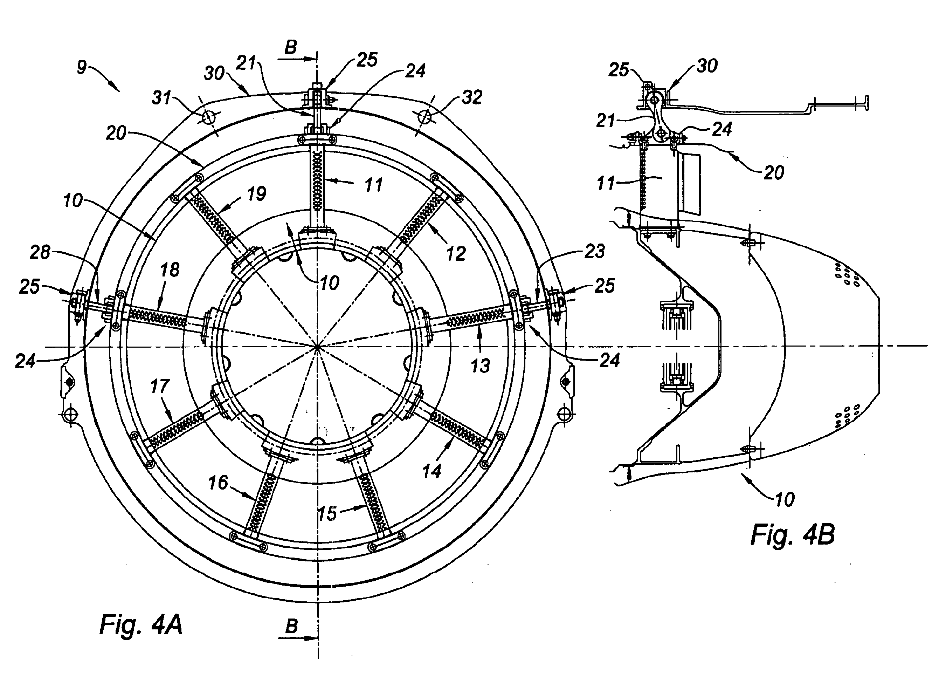

Chaque biellette 21,23,28 est montée de façon articulée sur deux pivots dont les axes de pivotement sont transversaux par rapport à la direction axiale du carter, comme illustré plus en détail sur les figures 4A et 4B. Les deux pivots sont engagés dans des chapes 24 et 25 solidaires, respectivement, de la virole intermédiaire 20 et de l'anneau externe 30.

La position angulaire des biellettes 21, 23, 28 est optimisée afin de réduire les efforts dans la virole intermédiaire 20. Selon l'exemple de réalisation de carter des figures 3 et 4A, les trois biellettes 21, 23, 28 sont positionnées respectivement à des angles d'environ 0°, 80° et -80° par rapport à la verticale (direction dite "à 12 heures" en regardant dans l'axe du carter du turboréacteur).

Le moyeu central 10 est fixé à la virole 20 par l'intermédiaire de bras structuraux 11 à 19 disposés radialement en étoile entre le moyeu 10 et la virole intermédiaire 20.

Sur l'exemple de réalisation des figures 3 et 4A, les bras radiaux 11 à 19 sont au nombre de neuf, répartis régulièrement à des angles d'environ 0°, ±40°, ±80°, ±120° et ±160° par rapport à la verticale. Les bras sont de deux types : les bras principaux 11, 13 et 18 situés à 0°, 80° et -80° (par rapport à la verticale) se trouvent dans le prolongement direct des biellettes de suspension 21, 23 et 28. Ces bras principaux 11,13,18 supportent donc l'essentiel des efforts mécaniques résultant du poids, de la poussée et des manoeuvres de direction. Les six autres bras 12, 14, 15, 16, 17, 19 situés à ±40°, ±120°, ±160° sont éloignés des bras de suspension et supportent relativement moins d'efforts mécaniques. Ces bras moins chargés forment les bras secondaires.

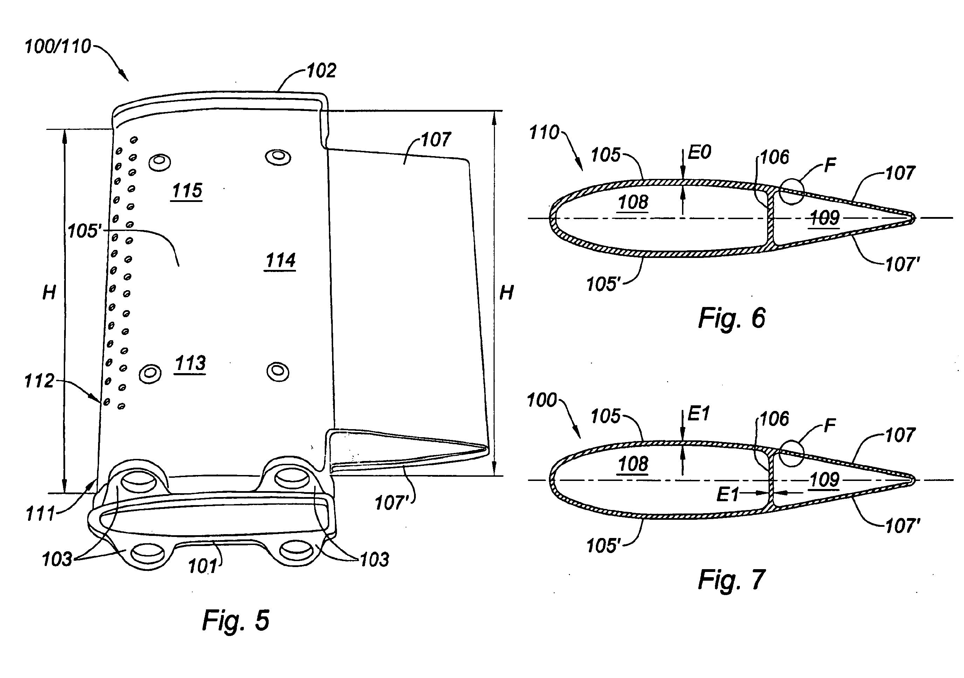

Les figures 5 à 10 montrent que les bras 100, 110 ont une structure creuse s'étendant entre une partie de base 101, comportant ici quatre pattes d'attaches 103 pour fixation sur le moyeu 10, et une partie de sommet 102, comportant ici deux pas de vis 104 pour fixer le bras sur la virole intermédiaire 20.

Comme illustré sur les figures 5 à 10, chaque bras 100 /110 est formé d'un corps principal comportant deux parois latérales 105 et 105'. La section des bras présente approximativement une forme d'ellipse tronquée par une cloison transversale 106 joignant les deux parois latérales 105 et 105' du bras. Les deux parois latérales 105,105' du bras sont prolongées vers l'arrière par deux parois 107, 107' se joignant pour former une ailette de fuite dans le prolongement du bras. Le bras 100 ou 110 présente ainsi un profil transversal proche d'un profil symétrique d'aile creuse comportant deux cavités 108 et 109 séparées axialement par une cloison transversale 106. Les deux parois 107 et 107' de l'ailette sont d'épaisseur réduite par rapport aux parois du corps principal.

Selon l'invention, les parois des bras secondaires 12,14,15,16,17 et 19 sont amincies par rapport aux parois des bras principaux 11, 13 et 18.

Dans un premier mode de réalisation illustré sur la figure 6, le corps du bras principal 110 comporte des parois d'épaisseur E0 constante sur la quasi-totalité de sa hauteur H, à l'exception de la base 101 et du sommet 102 (l'ailette conserve une épaisseur de paroi réduite, inférieure à EO).

La figure 7 montre une section transversale d'un bras secondaire 100 dont les parois 105, 105' et 106 sont amincies à une épaisseur réduite E1. La réduction d'épaisseur des parois de bras secondaire peut être de l'ordre d'un quart à la moitié de l'épaisseur d'un bras principal.

Des exemples d'épaisseur de parois de bras structuraux sont donnés dans le tableau I ci-après.

De préférence, l'ensemble des parois 105, 105' et 106 autour de la cavité antérieure 108 de chaque bras secondaire 100, c'est-à-dire les parois des faces latérales 105-105' et de la cloison transversale 106, présentent une telle épaisseur réduite E1. Les parois 107-107' de l'ailette à l'arrière du corps du bras 100 ont également une épaisseur F réduite, notamment égale ou inférieure à E1.

De façon avantageuse, on peut obtenir ainsi sur chaque bras un gain de poids pouvant atteindre environ un tiers de la masse d'un bras.

Appliqué aux six bras secondaires 12,14,15,16,17,19 disposés à distance des biellettes 21,23,28 suivant la configuration des figures 2 et 3, une réduction de l'épaisseur de paroi de 30% conduit à un gain de poids de l'ordre de la masse de deux bras.

Ainsi, dans un carter 9 selon l'invention, les bras secondaires 12,14,15,16,17,19 ont une épaisseur de paroi inférieure à l'épaisseur de paroi des bras principaux 11,13 et 18, l'épaisseur des parois 105 des bras étant sensiblement constante sur la plus grande partie de la hauteur H des bras. A titre d'exemple non limitatif, les bras principaux 11,13,18 peuvent avoir une épaisseur de paroi de l'ordre d'un millimètre et les bras secondaires 12,14,15,16,17,19 peuvent avoir une épaisseur de paroi de l'ordre de 0,7 mm.

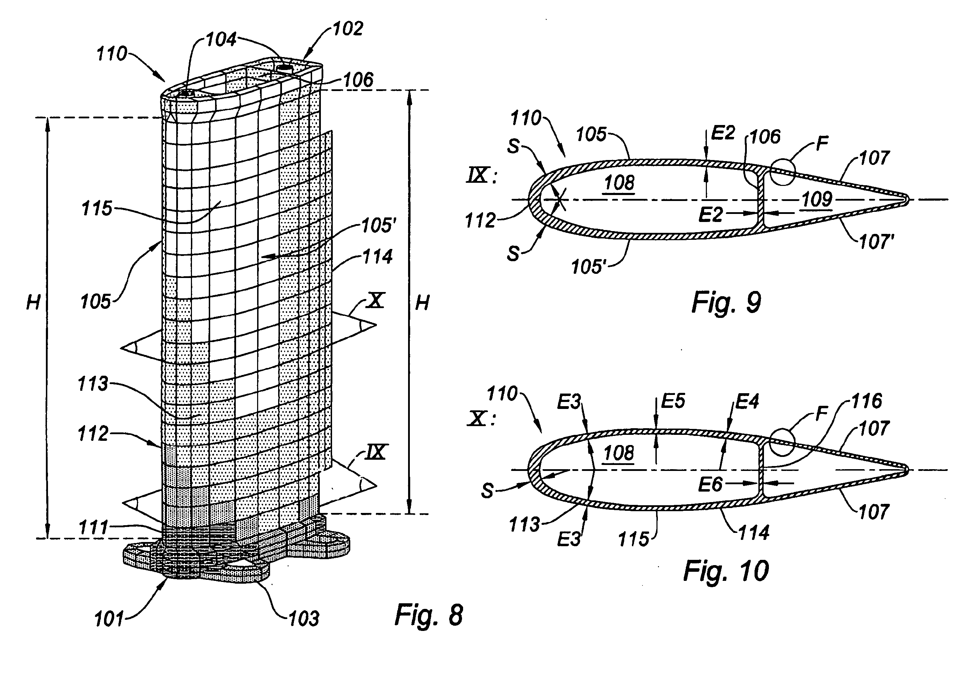

Les figures 8 à 10 montrent d'autres réalisations de bras principaux 110 dans laquelle la géométrie des bras est optimisée en fonction des contraintes mécaniques supportées localement par les bras principaux.

La figure 8 montre une vue en perspective d'un bras principal 110 sur lequel un quadrillage moucheté fait ressortir les zones où se concentrent les contraintes maximales (densité de points croissant avec le niveau de contrainte).

Dans l'exemple de la figure 8, le bras comporte plusieurs zones de contraintes : les zones qui travaillent sont essentiellement, ici, les zones situées le long du bord d'attaque 112 et les zones situées à l'arrière du bras, en particulier la cloison transversale 106 et les flancs 114 (parois latérales du bras) situés au voisinage de la cloison 106. Les contraintes maximales se concentrent, selon l'exemple de la figure 8, dans la partie inférieure du bras 110, à la base 111 du bord d'attaque et le long du pourtour de la base 101 (sous le plan transversal IX).

Selon l'invention, il est prévu d'augmenter localement l'épaisseur des parois de chaque bras principal dans les zones les plus chargées et éventuellement de réduire l'épaisseur des parois du bras dans les zones les moins chargées.

Ainsi, dans un deuxième mode de réalisation de bras principal 110 représenté sur la figure 9, les parois présentent une surépaisseur S dans la zone 111-112 de contraintes maximales qui s'étend ici à la partie inférieure du bord d'attaque et se prolonge sur le pourtour de la base 101 et/ou le long du bord d'attaque 112 du bras 110.

Dans cette zone 111 de contrainte maximale, le bras principal présente une épaisseur de paroi S supérieure à l'épaisseur de paroi E2 dans le reste de la partie tubulaire 105 du bras, cette surépaisseur pouvant atteindre le double ou le triple de l'épaisseur de paroi dans la zone de contrainte minimale.

Le tableau I ci-après donne des exemples d'épaisseur de parois de bras principal selon le deuxième mode de réalisation de l'invention.

Le bras principal 110 peut présenter ainsi un surcroît d'épaisseur S dans la zone 111 de contrainte maximale, le reste de la partie tubulaire du bras présentant une épaisseur E2 constante.

De façon avantageuse, l'apport d'un surcroît de matière S représentant de l'ordre de un à quelques pourcents (typiquement 2% ou moins) de la masse totale du bras principal 110 dans la zone 111 la plus chargée du bras permet de réduire le niveau de contrainte maximale supportée par les parois du bras 110 d'une ou de plusieurs dizaines de pourcents dans cette zone (le niveau de contrainte est abaissé typiquement de 20% environ).

L'avantage essentiel d'une telle réduction du niveau de contrainte est de doubler voire même de tripler, la durée de vie escomptée des bras principaux.

La figure 8 montre encore que les parois tubulaires 105 du bras principal 110 présentent une zone de contrainte minimale 115, qui s'étend, ici dans l'exemple de la figure 8, sur une portion comprise entre un quart et trois quart des parois, dans la partie 115 supérieure et antérieure du bras en allant vers le bord d'attaque. Il apparaît des zones de contraintes médianes 113-114 couvrant une portion inférieure 113 du bras et toute une portion postérieure 114 du bras en allant vers la cloison 106.

Selon un troisième mode de réalisation illustré sur la figure 10, l'épaisseur des parois du bras principal 110 dans la zone de contrainte minimale 115 est amincie à une valeur réduite E5 inférieure à la valeur d'épaisseur E3 de paroi dans la zone de contrainte médiane 113, épaisseur E3 elle-même inférieure à l'épaisseur S de paroi surépaissie dans la zone de contrainte maximale 111-112.

Dans la zone de contrainte minimale 115 couvrant typiquement la moitié de la surface de parois du bras, l'épaisseur E5 de paroi peut être réduite d'un quart ou de moitié par rapport aux épaisseurs E3 et E4 des parois du bras dans les zones de contraintes moyennes 113 et 114, tandis que la zone de contrainte maximale présente une épaisseur S de l'ordre de 100% à 200% des épaisseurs E3 et E4.

Le tableau I ci-après donne des exemples d'épaisseur de bras principal selon le troisième mode de réalisation de l'invention.

**Tableau I**

| **Exemples d'épaisseurs des parois de bras structuraux exprimées en pourcentage par rapport à l'épaisseur de référence E0** | | | | | | |
|---|---|---|---|---|---|---|
| Epaisseur | Bord 112 d'attaque | Parois latérales 105 | | | Cloison 106 | Ailettes 107 |
| Bras secondaire (selon l'invention) | 50%à100% (typ. E1=70%E0) | 50% à 100% (typ. E1=70%E0) | | | 50% à 100% (typ. E1=70%E0) | (typ. F=70%E0) |
| Bras principal (première réalisation) | 100% (E0) | 100% (E0) | | | 100% (E0) | (typ. F=70%E0) |
| Bras principal (deuxième réalisation) | 100%à200% (typ. S=150%E0) | 100% (E2=E0) | | | 100% (E2=E0) | (typ. F=70%E0) |
| Bras principal (troisième réalisation) | 100%à200% (typ. S=150%E0) | Zone113 E3 varie entre S et E5 | Zone 115 50%à100% (typ. E5=70%E0) | Zone114 50%àl50% (typ. E4=E0) | 50% à 150% (typ. E6=E0) | (typ. F=70%E0) |

Les techniques de fonderie et de forge permettent avantageusement d'obtenir des bras structuraux présentant des transitions progressives (diminution ou augmentation) dans les épaisseurs de parois.

Les bras sont réalisés de préférence en métal, notamment en alliage métallique à base de nickel.

De façon avantageuse, un bras principal présentant une épaisseur de paroi amincie sur toute sa hauteur, à l'exception d'une zone de renfort 111 ceinturant la base du bras et s'étendant le long du bord d'attaque procure encore un gain de masse de l'ordre de 15%, soit pour trois bras principaux, un gain de poids de l'ordre d'un tiers à une moitié de la masse d'un bras.

Sur l'ensemble du carter, la réduction de l'épaisseur des parois des bras secondaires et l'optimisation du profil des parois des bras principaux procure ainsi un gain de poids supérieur au double de la masse d'un bras, ce gain de poids pouvant représenter trois fois la masse d'un bras secondaire selon l'invention.

## Revendications

1. Carter structural (9) de turbomoteur comprenant un moyeu central (10), au moins une virole (20) intermédiaire et un anneau (30) externe, concentriques autour d'une direction axiale, l'anneau externe et la virole intermédiaire étant reliés par l'intermédiaire de biellettes (21,23,28), la virole intermédiaire et le moyeu central étant reliés par une série de bras (11-19) creux fixés radialement, **caractérisé par le fait que** la série de bras comprend au moins un bras principal (11,13,18&110) et au moins un bras secondaire (12,14,15,16,17,19&100), chaque bras principal (11), étant disposé dans le prolongement d'une biellette (21) et ayant une masse supérieure à celle d'un bras secondaire (12) disposé à distance des biellettes (21,24).

2. Carter selon la revendication 1, dans lequel chaque bras comprend un corps principal creux comportant un bord d'attaque (112) et des parois latérales (105,105'), chaque bras principal (110) présentant, selon au moins une section transversale, une épaisseur de paroi (E0,E2 supérieure à l'épaisseur de paroi (E1) d'un bras secondaire (100).

3. Carter selon la revendication 1 ou 2, dans lequel chaque bras principal (110) comporte au moins une zone (111,112) présentant une épaisseur (S) de paroi supérieure à l'épaisseur (E2,E3,E5,E4) des parois du reste (113,115,114) du bras.

4. Carter selon la revendication 3, dans lequel le bras principal (110) présente une diminution progressive d'épaisseur (S/E3/E5) de paroi entre la zone (111,112) d'épaisseur supérieure (S) et le reste (115) du bras.

5. Carter selon l'une des revendications 1 à 4, dans lequel les bras secondaires (100) présentent des parois latérales (105,105') d'épaisseur (E1) de l'ordre de 70% de l'épaisseur (E0) des parois d'un bras principal (110).

6. Carter selon l'une des revendications 1 à 5, dans lequel chaque bras creux (100,110) comporte en aval du corps principal, des parois d'ailette (107,107') formant un bord de fuite, les parois d'ailette ayant une épaisseur (F) inférieure à l'épaisseur (E0,E1,E2,E3,E4) des parois (105) du corps principal du bras.

7. Carter selon l'une des revendications 1 à 6, **caractérisé en ce que** chaque biellette (21,23,28) est articulée sur deux axes de pivotement solidaires, respectivement, de l'anneau externe (30) et de la virole intermédiaire (20), les axes de pivotement étant transversaux par rapport à la direction axiale du carter (9).

8. Turbomoteur **caractérisé en ce qu'**il comprend au moins un carter structural selon l'une des revendications précédentes.

## Claims

1. Structural casing (9) for a turbine engine, comprising a central hub (10), at least one intermediate shroud (20) and an external ring (30), which are concentric about an axial direction, the external ring and the intermediate shroud being joined by means of links (21, 23, 28), the intermediate shroud and the central hub being joined by a series of radially attached hollow arms (11-19), **characterised in that** the series of arms comprises at least one main arm (11, 13, 18 & 110) and at least one secondary arm (12, 14, 15, 16, 17, 19 & 100), each main arm (11) being arranged in the extension of a link (21) and having a mass which is greater than that of a secondary arm (12) arranged at a distance from the links (21, 24).

2. Casing according to claim 1, wherein each arm comprises a hollow main body comprising a leading edge (112) and side walls (105, 105'), each main arm (110) having, in at least one cross-section, a wall thickness (E0, E2) which is greater than the wall thickness (E1) of a secondary arm (100).

3. Casing according to either claim 1 or claim 2, wherein each main arm (110) comprises at least one region (111, 112) having a wall thickness (S) which is greater than the thickness (E2, E3, E5, E4) of the walls of the remainder (113, 115, 114) of the arm.

4. Casing according to claim 3, wherein the main arm (110) has a progressive reduction in wall thickness (S/E3/E5) between the region (111, 112) of greater thickness (S) and the remainder (115) of the arm.

5. Casing according to any of claims 1 to 4, wherein the secondary arms (100) have side walls (105, 105') of which the thickness (E1) is approximately 70 % of the thickness (E0) of the walls of a main arm (110).

6. Casing according to any of claims 1 to 5, wherein each hollow arm (100, 110) comprises, downstream of the main body, fin walls (107, 107') which form a trailing edge, the fin walls having a thickness (F) which is smaller than the thickness (E0, E1, E2, E3, E4) of the walls (105) of the main body of the arm.

7. Casing according to any of claims 1 to 6, **characterised in that** each link (21, 23, 28) is articulated on two pivot pins, which are rigidly connected to the external ring (30) and to the intermediate shroud (20) respectively, the pivot pins being transverse with respect to the axial direction of the casing (9).

8. Turbine engine **characterised in that** it comprises at least one structural casing according to any of the preceding claims.

## Patentansprüche

1. Strukturgehäuse (9) eines Turbomotors, eine zentrale Nabe (10), mindestens eine Zwischenring (20) und einen Außenring (30) umfassend, die um eine axiale Richtung konzentrisch sind, wobei der Außenring und die Zwischenring mit Hilfe von Schwingarmen (21, 23, 28) verbunden sind, wobei die Zwischenring und die zentrale Nabe durch eine Reihe von radial fixierten Hohlauslegern (11 - 19) verbunden sind, **dadurch gekennzeichnet, dass** die Reihe von Auslegern mindestens einen Hauptausleger (11, 13, 18 und 110) und mindestens einen sekundären Ausleger (12, 14, 15, 16, 17, 19 und 100) umfasst, wobei jeder Hauptausleger (11) in der Verlängerung eines Schwingarms (21) angeordnet ist und eine Masse hat, die größer ist als diejenige eines im Abstand von den Schwingarmen (21, 24) angeordneten sekundären Auslegers (12).

2. Gehäuse nach Anspruch 1, wobei jeder Ausleger einer hohlen Hauptkörper umfasst, der eine Leitkante (112) und Seitenwände (105, 105') umfasst, wobei jeder Hauptausleger (110) entlang mindestens eines Querschnitts eine Wanddicke (E0, E2) aufweist, die größer ist als die Wanddicke (E1) eines sekundären Auslegers (100).

3. Gehäuse nach Anspruch 1 oder 2, wobei jeder Hauptausleger (110) mindestens einen Bereich (111, 112) umfasst, der eine Wanddicke (S) aufweist, die größer ist als die Dicke (E2, E3, E5, E4) der Wände des Rests (113, 115, 114) des Auslegers.

4. Gehäuse nach Anspruch 3, wobei der Hauptausleger (110) eine fortschreitende Minderung der Dicke (S/E3/E5) der Wand zwischen dem Bereich (111, 112) größerer Dicke (S) und dem Rest (115) des Auslegers aufweist.

5. Gehäuse nach einem der Ansprüche 1 bis 4, wobei die sekundären Ausleger (100) Seitenwände (105, 105') mit einer Dicke (E1) in der Größenordnung von 70% der Dicke (E0) der Wände eines Hauptauslegers (110) aufweisen.

6. Gehäuse nach einem der Ansprüche 1 bis 5, wobei jeder hohle Ausleger (100, 110) dem Hauptkörper nachgeordnet Flügelwände (107, 107') umfasst, die eine Austrittskante bilden, wobei die Flügelwände (107, 107') eine Dicke (F) haben, die kleiner ist als die Dicke (E0, E1, E2, E3, E4) der Wände (105) des Hauptkörpers des Auslegers.

7. Gehäuse nach einem der Ansprüche 1 bis 6, **dadurch gekennzeichnet, dass** jeder Schwingarm (21, 23, 28) an zwei fest verbundenen Schwenkachsen des Außenrings (30) bzw. der Zwischenring (20) angelenkt ist, wobei die Schwenkachsen in Bezug auf die axiale Richtung des Gehäuses (9) querverlaufend sind.

8. Turbomotor, **dadurch gekennzeichnet, dass** er mindestens ein Strukturgehäuse nach einem der vorhergehenden Ansprüche umfasst.
